# EUROPEAN PATENT APPLICATION

(11) **EP 1 647 876 A2**
(43) Date of publication of application: **19.04.2006**
(21) Application number: 05020144.1
(22) Date of filing: 15.09.2005
(51) Int. Cl.: G06F 1/20

(54) **External cooling module**

(30) Priority: 15.10.2004 US 966911
(71) Applicant: Hewlett-Packard Development Company, L.P., Houston, TX 77070 (US)
(72) Inventor: Lev, Jeffrey A., Cypress, Texas 77429 (US); Doczy, Paul J., Cypress, Texas 77429 (US)
(74) Representative: Schoppe, Fritz

(57) **Abstract**

A portable computer system (10) comprising a processor (20) within a portable computer system chassis (12). The processor (20) is configured to operate within a range of speeds. The portable computer system (10) further comprises an external cooling module (30) detachably connected to the chassis (12). The external cooling module (30) extends into the portable computer system chassis (12) and is thermally coupled to the processor (20).

## Description

### BACKGROUND

Portable computers are compact, lightweight computing devices and may comprise any portable electronic device, for example, notebook computers, personal digital assistants, tablet personal computers, and laptop computers. One concern with the design and operation of portable computers is managing the thermal loads generated by the electronic equipment, e.g., processors, PC cards, and inverter boards. This concern is amplified with increased thermal loads resulting from increased performance of portable computers.

Thermal loads are often managed by cooling systems built into the portable computer. As the thermal loads increase, the size, weight, and complexity of the required cooling system also increases. These size and weight increases are not compatible with the compact, mobile form factors of portable computers.

### BRIEF SUMMARY

Therefore, as can be appreciated, there is a need for cooling systems for portable computers that enhance performance of the electronic components without compromising the portability of the system. This need is solved in large part by a portable computer system comprising a processor within a portable computer system chassis. The processor is configured to operate within a range of speeds. The portable computer system further comprises an external cooling module detachably connected to the chassis. The external cooling module extends into the portable computer system chassis and is thermally coupled to the processor.

### BRIEF DESCRIPTION OF THE DRAWINGS

For a detailed description of exemplary embodiments of the invention, reference will now be made to the accompanying drawings in which:

Figure 1 shows a partial sectional side-view of a portable computer system in accordance with embodiments of the invention;

Figure 2 shows an isometric view of an external cooling module in accordance with embodiments of the invention;

Figure 3 shows isometric views of a portable computer system and an external cooling module in accordance with embodiments of the invention;

Figure 4 shows a partial sectional view of an external cooling module installed on a portable computer system in accordance with embodiments of the invention;

Figure 5 shows a partial sectional view of an external cooling module installed on a portable computer system in accordance with embodiments of the invention;

Figure 6 shows a partial sectional view of an external cooling module installed on a portable computer system in accordance with embodiments of the invention; and

Figure 7 shows a partial sectional view of an external cooling module installed on a portable computer system in accordance with embodiments of the invention.

### NOTATION AND NOMENCLATURE

Certain terms are used throughout the following description and claims to refer to particular system components. As one skilled in the art will appreciate, computer companies may refer to a component by different names. This document does not intend to distinguish between components that differ in name but not function. In the following discussion and in the claims, the terms "including" and "comprising" are used in an open-ended fashion, and thus should be interpreted to mean "including, but not limited to...." Also, the term "thermally couple" or "thermally couples" is intended to mean either an indirect or direct thermal connection. Thus, if a first device thermally couples to a second device, that thermal connection may be through a direct thermal connection, or through an indirect thermal connection via other devices and connections.

### DETAILED DESCRIPTION

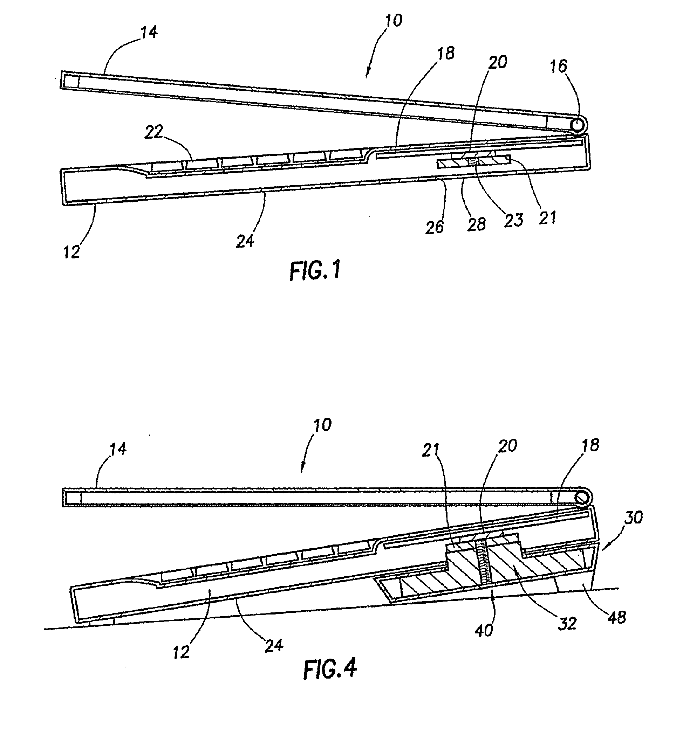

Referring now to Figure 1 a portable computer system 10 comprises chassis 12 and display panel 14. Hinge 16 rotatably connects display panel 14 to chassis 12. Chassis 12 encloses printed circuit board 18 to which processor 20 is mounted. Chassis 12 also supports keyboard 22. Heat sink 21 is thermally coupled to processor 20 and comprises threaded hole 23. Heat sink 21 may also be thermally coupled to other heat generating components within chassis 12, for example PC boards and inverter cards. Lower surface 24 of chassis 12 comprises aperture 26 that is substantially aligned with heat sink 21. Removable door 28 substantially covers aperture 26.

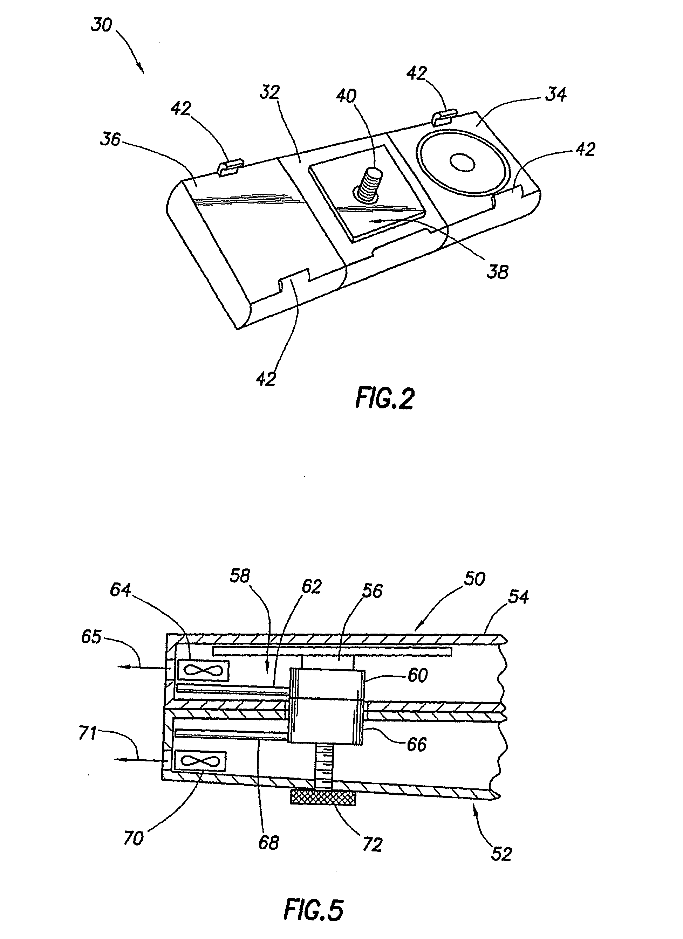

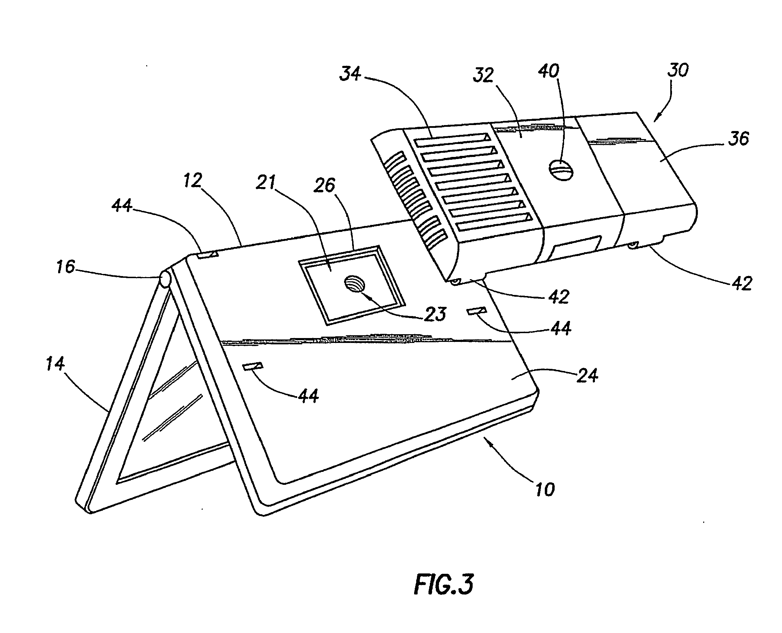

Referring now to Figure 2, cooling module 30 comprises heat sink 32, fan 34, and power supply 36. Cooling module 30 also comprises attachment mechanism 38 comprising screw 40 and alignment tabs 42. It will be appreciated that other types of attachment mechanisms, such as a pins, latches, and bolts could also be used with cooling module 30. Power supply 36 may comprise a connection to an external power source, connection to the portable computer system power, batteries, and/or another source of electric power. Power supply 36 provides electrical power to fan 34, which is arranged so as to move air across heat sink 32.

The relationship between portable computer system 10 and external cooling module 30 is can be seen in Figure 3. Door 28 (better seen in Figure 1) is removed to open aperture 26 and provide access to heat sink 21 within chassis 12. Screw 40 attaches to threaded hole 23. Alignment tabs 42 interface with slots 44 on lower surface 24 of chassis 12. Tabs 42 and slots 44 fix the angular orientation of cooling module 30 relative to chassis 12. It is understood that alignment of cooling module 30 relative to chassis 12 may be achieved with other alignment mechanisms, such as pins, or may not include any alignment mechanism at all.

The engagement of screw 40 and threaded hole 23 pulls cooling module 30 into close engagement with chassis 12 such that heat sink 32 thermally couples to heat sink 21 and processor 20. Depending on its material composition, screw 40 may effectively act as a heat pipe to transfer heat from processor 20 to heat sink 32. Other attachment and latching mechanisms, including bolts, clips, hooks, and other fastening systems, may also be used to attach cooling module 30 to chassis 12.

Referring now to Figure 4, cooling module 30 is shown installed on portable computer system 10. Heat sink 32 projects into chassis 12 and thermally couples to heat sink 21 and processor 20. As processor 20 operates, it generates heat, a portion of which is initially transferred into heat sink 21. Heat sink 21 may also be thermally coupled to other heat generating electrical components, for example PC boards and inverter cards. The heat from heat sink 21 is preferably primarily transferred to screw 40 and heat sink 32. The interface between heat sink 32 and heat sink 21 would also transfer a portion of the heat. Fan 34 (see Figure 3) moves air across heat sink 32 to dissipate the heat into the environment. Cooling module 30 may also include a foot or feet 48 that support the module on a flat surface and serve to provide a stable support for portable computer system 10.

Processor 20 is preferably a multi-speed processor having at least two distinct operating speeds. As the operating speed of the processor increases, the heat generated by the processor also increases. In certain embodiments, processor 20 may be configured to operate at a reduced speed when external cooling module 30 is not installed. Without external cooling module 30, the operating speed of processor 20 may be limited to a level where the heat produced could be properly handled by the internal cooling system of the portable system. Once external cooling module 30 is installed, the operating speed of processor 20 could be increased. The additional cooling capacity from external cooling module 30 would dissipate the heat generated by the faster processing.

By implementing an external cooling module and providing a processor that can increase its operating speed, the internal cooling requirements for a portable computer system could be reduced. The portable computer system could operate in a reduced speed mode for most applications and the external cooling module only installed when a processing-intensive task was to be performed. A thermal solution could also facilitate smaller form factor portable devices since the internal cooling systems could be reduced in size and capacity. The external cooling module also makes it possible to use desktop-type processors in portable systems because the add-on thermal capability could be used when high operating speeds are needed.

Referring now to Figure 5 a portable computer system 50 comprises external cooling module 52 connected to chassis 54. Chassis 54 encloses processor 56 and comprises an internal cooling system 58 made up of internal heat sink 60, internal heat pipe 62, and internal fan 64. External cooling module 52 comprises external heat sink 66, external heat pipe 68, external fan 70, and screw 72. When external cooling module 52 is installed, external heat sink 66 is moved into and held in contact with internal heat sink 60 by screw 72. Heat generated by processor 56 is transferred into heat sinks 60, 66, and then through heat pipes 62, 68. Fans 64 and 70 move air across heat pipes 61 and 68 to dissipate the heat to th e environment, as symbolized by air directional arrows 65 and 71.

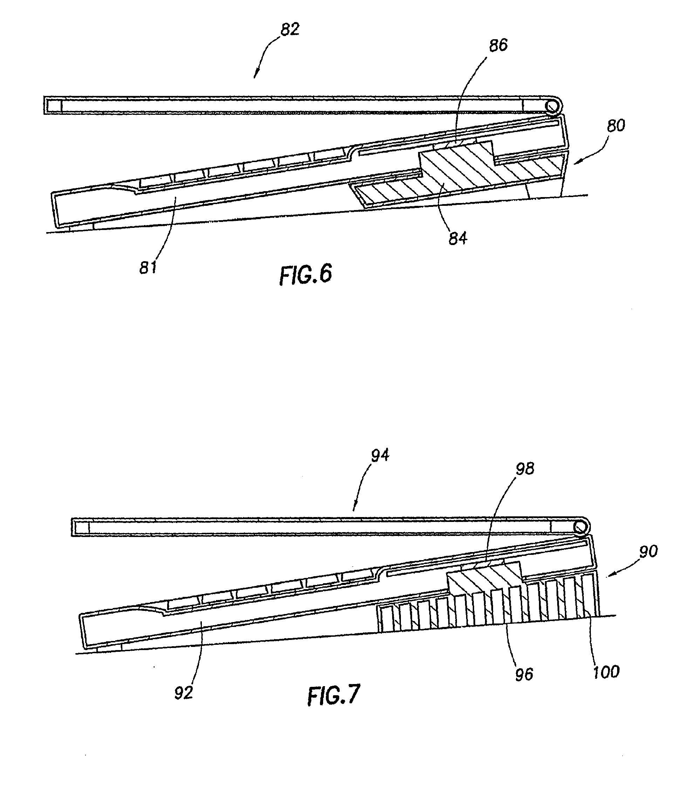

Referring now to Figure 6, cooling module 80 is shown installed on chassis 81 of portable computer system 82. Cooling module heat sink 84 projects into chassis 81 in direct thermal contact with processor 86. As processor 86 operates, heat is transferred directly to heat sink 84 and dissipated to the atmosphere through convection or other modes of heat transfer. Cooling module 80 may be connected to chassis 81 by a latch or other acceptable mechanism for holding heat sink 84 in thermal contact with processor 86.

Referring now to Figure 7, cooling module 90 is shown installed on chassis 92 of portable computer system 94. Cooling module heat sink 96 is thermally coupled to processor 98. Cooling module heat sink 96 comprises heat-dissipating fins 100. Fins 100 may be shaped so as to support the module on a flat surface and serve to provide a stable support for portable computer system 94.

The above discussion is meant to be illustrative of the principles and various embodiments of the present invention. Numerous variations and modifications will become apparent to those skilled in the art once the above disclosure is fully appreciated. For example, other types of portable electronic devices may be equipped with external cooling modules to improve performance. It is intended that the following claims be interpreted to embrace all such variations and modifications.

## Claims

1. A portable computer system (10), comprising:
a processor (20) within a portable computer system chassis (12), wherein said processor (20) is configured to operate within a range of speeds; and
an external cooling module (30) detachably connected to said chassis (12), wherein said external cooling module (30) extends into the portable computer system chassis (12) and is thermally coupled to said processor (20).

2. The portable computer system (10) of claim 1 wherein the speed of said processor (20) is determined by the temperature of said processor (20).

3. The portable computer system (10) of claim 2 wherein said processor (20) is configured to operate at a first speed when thermally coupled to said external cooling module (30) and a second speed when not thermally coupled to said external cooling module (30).

4. The portable computer system (10) of claim 3 wherein the first speed is faster than the second speed.

5. The portable computer system (10) of claim 1 wherein said external cooling module (30) further comprises:
a heat sink; and
a heat conductor that extends into said chassis (12) from said heat sink, wherein said heat conductor is thermally coupled to said heat sink and said processor (20).

6. The portable computer system (10) of claim 5 wherein said heat sink comprises a plurality of fins.

7. The portable computer system (10) of claim 1 wherein said external cooling module (30) further comprises a fan that moves air over a heat sink.

8. The portable computer system (10) of claim 1 further comprising an internal cooling module (30) disposed within said chassis (12) and thermally coupled to said processor (20).

9. The portable computer system (10) of claim 8 wherein said internal cooling module (30) comprises a first heat sink thermally coupled to said processor (20).

10. The portable computer system (10) of claim 8 wherein said external cooling module (30) further comprises:
a heat sink; and
a heat conductor extending into said chassis (12) from said heat sink, wherein said heat conductor is thermally coupled to said heat sink and a heat sink of said internal cooling module (30).
